# EUROPÄISCHE PATENTSCHRIFT

(11) **EP 1 762 421 B1**
(45) Veröffentlichungstag und Bekanntmachung des Hinweises auf die Patenterteilung: **06.01.2010**
(21) Anmeldenummer: 05108177.6
(22) Anmeldetag: 07.09.2005
(51) Int. Cl.: B60K 37/06

(54) **Bedienungsschalteranordnung für ein Kraftfahrzeug**
Operating switch assembly for motor vehicle
Ensemble de commutateur pour automobile

(43) Veröffentlichungstag der Anmeldung: 14.03.2007
(73) Patentinhaber: Ford Global Technologies, LLC, Dearborn, MI 48126 (US)
(72) Erfinder: Hoffmann, Hans, 50226 Frechen (DE); Scheck, Martin, 50259 Pulheim (DE); Becker, Stefan, Dr., 51503 Rösrath (DE); Klingenstein, Ralf, 50733 Köln (DE); Jamison, Andrew, Essex, CM77 8GT (GB)
(74) Vertreter: Dörfler, Thomas

(56) Entgegenhaltungen:
- EP-A- 1 502 835
- EP-A- 1 508 480
- DE-A- 19 535 423
- DE-A1- 4 423 744
- DE-A1- 4 430 309
- DE-A1- 10 212 781
- DE-C1- 10 046 748

## Beschreibung

Die Erfindung betrifft eine Bedienungsschalteranordnung für ein Kraftfahrzeug, insbesondere zur Integration in ein Lenkrad, mit vier Schaltelementen, die kreuzförmig angeordnet sind, und mit einem weiteren Schaltelement, das relativ zu den vier Schaltelementen zentral angeordnet ist, wobei die vier Schaltelemente kreuzförmig um das zentrale weitere Schaltelement angeordnet sind, sowie Verfahren zur Bedienung von Vorrichtungen zur Anzeige und Steuerung von kraftfahrzeugbezogenen Funktionen.

Bedieneinrichtungen in Form von Schaltern, Tastern, Drehschaltern, Kippschaltern und dergleichen werden notwendigerweise in Kraftfahrzeugen eingesetzt. Dabei werden einfache Schaltelemente, die entweder auf Dreh- oder Druckbetätigung oder auf einfache Kipp-Rastbetätigung basieren, lediglich für solche Einrichtung verwendet, die nur die Schaltzustände "ein" und "aus" kennen.

Daneben werden jedoch in Kraftfahrzeugen vielfach elektronische Geräte eingesetzt, die nicht autonom Funktionieren, sondern die entsprechend angesteuert werden können bzw. müssen. Hierzu sind komplexere Bedieneinrichtungen notwendig, wozu vielfach auch eine mehrfache Anordnung von einzelnen Schaltern und Schaltelementen bzw. Bedienelementen miteinander in Korrelation stehen.

Dazukommt, dass die Vielzahl von Bedieneinrichtungen für die große Anzahl von Geräten an Armaturenbrettern und Lenkrädern schwer unterbringbar sind. Als Folge davon müssen die Bedieneinrichtungen klein gehalten werden, was auf zu einer verwirrenden Vielfalt von Bedienknöpfen, -tasten und -schaltern gleichartigen oder ähnlichen Aufbaus führt.

Darüber hinaus werden, wie eingangs bereits erwähnt, vermehrt elektronische Geräte, beispielsweise das mittlerweile weit verbreitete Navigationssystem sowie auch Fahrerassistenzfunktionen und die gesonderte Beeinflussung bzw. Beeinflussbarkeit der Sicherheitseinrichtungen oder sonstiger Einrichtungen im Kraftfahrzeug durch Schaltelemente betätigt. Hierzu werden vielfach Multifunktionsbedieneinrichtungen verwendet, die zudem meist menügeführt sind. Eine entsprechende Vorrichtung zur zentralen Anzeige fahrzeugbezogener Daten ist zum Beispiel aus der EP 1 195 299 B1 bekannt.

Eine weitere Anwendung moderner Fahrzeuginformationstechnologie besteht darin, den Fahrer bei der Bedienung eines Fahrzeugs durch das bedarfsorientierte Bereitstellen von Bordinformationen und Bedienhinweisen zu unterstützen. Auf diese Weise kann der Fahrer zum Beispiel auf das Lesen einer umfangreichen Bedienungsanleitung verzichten und trotzdem alle in sein Fahrzeug bereitgestellten Funktionen korrekt bedienen.

Diese Vielfalt an zu bedienenden Einrichtungen birgt jedoch auch die Gefahr, dass der Fahrer vom Verkehrsgeschehen abgelenkt wird und somit die Unfallgefahr stark erhöht ist. Somit besteht der Bedarf, die Bedienelemente möglichst intuitiv benutzbar auszugestalten.

Daneben ist es bekannt, auch Informationen auditiv auszugeben, so dass der Fahrer nicht visuell abgelenkt wird. Ein entsprechendes System ist zum Beispiel aus der DE 101 26 673 A1 bekannt. Bei diesem System kommt ein Multifunktionslenkrad zum Einsatz, an dem Druckknöpfe vorgesehen sind, um ohne loslassen des Lenkrads das System zu bedienen.

Aus der DE 100 03 610 A1 ist eine Bedieneinrichtung für elektrische/elektronische Geräte in Kraftfahrzeugen bekannt, bei welcher eine Drehbetätigung und eine Kippbetätigung vorgesehen ist, wobei nur ein gemeinsames Bedienelement dazu vorgesehen ist. Es handelt sich dabei um einen joystickartigen Knüppel, der neben der üblicherweise bekannten Kippfunktion zusätzlich eine Drehung um die eigene Achse erlaubt.

Die DE 199 41 947 A1 offenbart ein Lenkrad, das integrierte Bedienelemente aufweist, die als bidirektionale rotierbare Walze oder als Kreuz-Wippschalter ausgebildet sein können, wobei die Walze zusätzlich senkrecht zur Längs- bzw. Rotationsachse der Walze bewegbar ausgebildet sein kann, also drückbar ist. Die Bedienelemente sind dabei auf dem Lenkrad räumlich dem jeweilig zu steuernden Instrument zugeordnet.

Ein weiteres Lenkrad, das Schalter zur Bedienung von Fahrzeugfunktionen beinhaltet, ist aus der EP 1 046 565 A2 bekannt. Jeder Schalter funktioniert dabei gleichzeitig als Drehschalter und als Druckschalter, wobei der Schalter sich im unbetätigten Zustand selbsttätig mittig einstellt.

Die DE 198 07 410 A1 offenbart eine Multifunktionsbedieneinrichtung zur Auswahl und Steuerung einer Vielzahl von Funktionen umfassend ein Display, Funktionstasten, denen eine feste Funktion zugeordnet ist, deren Ablaufsteuerung mittels auf dem Display darstellbarer Softkeys beeinflussbar ist, und mindestens einem Bedienfeld fest zugeordneter Funktionalität. Dabei sind die Funktionstasten teilweise frei programmierbar ausgebildet und mindestens ein zweidimensionaler Menüauswahlschalter der Multifunktionsbedieneinrichtung zugeordnet. Daneben umfasst ein Ausführungsbeispiel vier über Kreuz angeordnete Funktionstasten, in deren Mitte ein Drehschalter angeordnet ist.

Die DE 102 12 781 A1 beschreibt ein Fahrzeuglenkrad mit zumindest einem auf diesem angeordneten Schalter, der in zumindest zwei im wesentlichen senkrecht aufeinander stehenden Richtungen, also horizontal und vertikal, betätigt werden kann, wobei der Schalter oder Taster auf einer Speicher des Lenkrads angeordnet ist. Weiter ist vorgesehen, dass der Schalter verschoben und/oder gedreht wird. Daneben kann der Schalter zusätzlich als Druckschalter fungieren, so dass er als Ganzes senkrecht zur Ebene des Lenkrads gedrückt werden kann.

Aus der EP 1508480 A2 (beinhaltet die Merkmale des Oberbegriffs des unabhängigen Anspruchs 1) ist eine Bedienungsschalteranordnung für ein Motorrad zur Steuerung einer Anzeigeneinrichtung beschrieben, bei dem vier Schaltelemente kreuzförmig angeordnet sind mit einem weiteren, zentralen Schaltelement zwischen den vier Schaltelementen. Die vier Schaltelemente werden über eine das zentrale Schaltelement umgebende gemeinsame Wipptaste betätigt, während das zentrale Schaltelement unabhängig von den vier Schaltelementen über eine separate Taste betätigbar ausgeführt ist. Zwar ermöglicht die gemeinsame Wipptaste eine kompakte Anordnung der Schaltelemente, es ist jedoch leicht möglich, daß zumindest zwei der vier Schaltelemente gleichzeitig betätigt werden und damit keine eindeutige Zuordnung zwischen dem Drücken der Wipptaste und der resultierenden Schaltfunktion besteht.

In der DE 4423744 A1 ist ein Fahrzeuglenkrad mit mehreren Betätigungselementen an der inneren Umfangsfläche des Lenkradkranzes offenbart. Durch diese Anordnung der Betätigungselemente kann der Fahrer verschiedenen Fahrzeugfunktionen schalten, ohne die Hände vom Lenkrad zu nehmen. Funktionen wie die Lautstärke des Autoradios oder die Helligkeit der Armaturenbeleuchtung können dabei auch durch längeres Drücken stufenlos bzw. analog gesteuert werden. Allerdings ist die Anordnung der Schalter an der inneren Umfangsfläche für den Fahrer nicht sofort intuitiv erfassbar, insbesondere bekommt der Fahrer keine unmittelbare haptische Rückmeldung, welches Betätigungselement er gerade drückt.

Aus der EP 1502835 A1 ist ein Verfahren und eine Vorrichtung bekannt, bei der eine Vielzahl von Fahrzeug- und anderen Funktionen durch zwei Bedienungsschalteranordnungen am Lenkrad ausgeführt werde können. Auch hier besteht eine Bedienungsschalteranordnung aus einem zentralen Schaltelement, umgeben von vier Schaltelementen. Allerdings werden für die Steuerung aller Funktionen bei der vorgesehenen Tastenbelegung immer zwei dieser Bedienungsschalteranordnungen benötigt, was insgesamt sehr aufwendig ist.

Aufgabe der Erfindung ist es, eine Bedienungsschalteranordnung bereitzustellen, die sowohl die Auswahl als auch die Ansteuerung einzelner fahrzeugbezogener Funktionen erlaubt, dabei eine ergonomische sinnvolle und intuitive Bedienung von fahrzeugbezogenen Funktionen ermöglicht und zudem den Fahrer in seiner Aufmerksamkeit möglichst wenig beeinträchtigt. Ferner sollte die Bedienungsschalteranordnung sich für die Menüsteuerung von modernen Fahrzeuginformations- und Bedienungssystemen eignen, wie z. B. Navigationssystemen. Zusätzlich sollte die Bedienungsschalteranordnung möglichst wenig Platz im Fahrzeug beanspruchen und letztendlich einfach aufgebaut sein.

Diese Aufgabe wird durch die in Anspruch 1 wiedergegebene Bedienungsschalteranordnung gelöst.

Dadurch, dass die Schaltelemente derart ausgeführt sind, dass sie separat von einander betätigbar sind und dass eine das weitere Schaltelement, insbesondere ringförmig, umgebende gemeinsame Wipptaste vorgesehen ist, über die die vier Schaltelemente separat betätigbar sind, ist es möglich dem Fahrer von Kraftfahrzeugen eine intuitive Bedieneinheit an die Hand zugeben, die zu dem kompakt und einfach aufgebaut ist und sich neben der Bedienung von elektrischen/elektronischen Geräten (z. B. Radio, Klimaanlage usw.) besonders für die menügestützte Bedienerführung und/oder -steuerung von modernen Fahrzeuginformations- und Bedienungssystemen eignet.

Unter "ringförmig umgebend" soll nicht allein eine kreisförmige Anordnung der Wipptaste um das zentrale Schaltelement herum zu verstehen sein. Es kommen auch ovale, elliptische, rechteckige, quadratische, rautenförmige und dergleichen Anordnungen der Wipptaste in Frage.

Durch die kreuzförmige Anordnung der Schaltelemente und die Betätigung der vier "äußeren" Schaltelemente über eine gemeinsame Wipptaste wird die intuitive und ergonomische Bedienung der Geräte bzw. Systeme sichergestellt. So ist es für den Fahrer besonders einfach sich durch Menüsysteme zu manövrieren und elektronische oder elektrische Geräte, wie z. B. eine Musikanlage zu bedienen. Dies wird noch durch die separate Betätigungsmöglichkeit der Schaltelemente verstärkt.

Durch die Überkreuzanordnung der vier Schaltelemente und deren entsprechenden Betätigungstasten lassen sich quasi gedachte Bewegungsrichtungen "links-rechts" und "rauf-runter" nachahmen, was für den Benutzer eine sinnige Logik hinsichtlich der Bedienung von vielen Funktionen ist. Dies trifft z. B. auf die Lautstärkeregelung oder Senderwahl eines Radios, CD-Spielers usw. zu. Auch trifft dies für die Navigation in hierarchisch angeordneten Menüs zu, bei denen eine Bewegung eines Steuercursors "rauf-runter" die Punkte einer Menüliste durchlaufen lässt, während "links-rechts" Menüebenen wechselt. Dies sind nur zwei von vielen Beispielen, die mit der Erfindung realisierbar sind.

In einer bevorzugten Ausführungsform ist das weitere Schaltelement unabhängig von den vier Schaltelementen über eine separate Taste betätigbar ausgeführt. Diese zentrale Taste dient dann z. B. zur einfachen Durchführung, Auswahl, Quittierung oder Bestätigung von Befehlen, Wechsel von angesteuerten Geräten usw.

Dabei können die durch ein oder mehrere Schaltelemente ausgeführten Funktionen mit den jeweiligen Schaltelementen fest zugeordnet werden. Dies ist z. B. sinnvoll für besonders wichtige Funktionen, wie die Lautstärkeregelung, die vorzugsweise dem gegenüberliegenden "rauf-runter" Paar Schaltelemente der vier Schaltelemente zugewiesen ist. So ist in jeder Situation sichergestellt, dass diese im Fahrzeugbetrieb mit am häufigsten eingesetzte Funktion immer bereit steht.

Alternativ können ein oder mehrere Schaltelemente derart ausgeführt sein, dass die ihnen zugewiesenen Funktionen frei programmierbar sind. In vielen Fahrzeugen werden Funktionen heutzutage auch über Logikeinheiten, Mikrocontroller oder Mikroprozessoren usw. gesteuert, die programmierbar sind. Dies trifft auch für die über die Schaltelemente auszulösenden oder zu bedienenden Funktionen zu. So ist es im Rahmen der Erfindung möglich einzelne oder mehrere Schaltelemente mit bestimmten Funktionen zu belegen, z. B. mit Favoriten oder häufig benutzten Funktionen. Der Fahrer bzw. Benutzer kann so sein eigenes auf sich abgestelltes und angepasstes Bediensystem zusammenstellen.

Alternativ können ein oder mehrere Schaltelemente derart ausgeführt sind, dass die ihnen zugewiesenen Funktionen sich kontextabhängig ändern. Dies erlaubt es, eine Vielzahl von Funktionen mit wenigen Schaltelementen anzusteuern. So können z. B. die "links-rechts" Schaltelemente beim Radiobetrieb den Sendersuchlauf in die jeweilige Richtung ansteuern, im CD-Betrieb den Wechsel der Titel bewirken oder im Kassetten-Betrieb ein Vor- bzw. Zurückspulen veranlassen. Das zentrale Schaltelement kann z. B. bei einem eingehenden Telefongespräch dessen Annahme bewirken und während des Gesprächs bzw. der Verbindung dessen Beendigung bewirken. Spielt dagegen das Radio, könnte vorgesehen sein, dass die normale kontextabhängige Funktion der Senderauswahl bzw. Programmierung vorübergehend geändert wird, auf die beschriebene Rufannahme.

Zusätzlich sind die Schaltelemente derart ausgeführt, dass sie in Abhängigkeit ihrer Betätigungsdauer unterschiedlichen Funktionen zugeordnet sind. Auch dies erlaubt es, mit dem beschränkten Platz im Fahrzeug sparsam umzugehen und mehrere Funktionen über ein Schaltelement zu betätigen. So kann bei einer kurzen Betätigung eine andere Funktion ausgelöst werden als bei einer längeren Betätigung oder einer dauerhaften Betätigung. So könnte ein kurzer Druck der zentralen Taste einen momentanen Sendersuchlauf im Radio anhalten, während ein längerer Druck der zentralen Taste ein Umschalten des Radios auf den CD-Spieler, also ein zyklisches Umschalten aller mit der Bedienungsschalteranordnung ansteuerbaren Geräte bewirken könnte, wobei das Loslassen das jeweilig momentan angewählte Gerät auswählt.

Trotz der teilweise besonders raffinierten Dreh-Kipp-Druck-Schalter aus dem Stand der Technik, die über eine gleichzeitige Drehung, Kippen oder Drücken eines Schaltelements möglichst viele Funktionen ausführen, ist festgestellt worden, dass die Schaltelemente Sinnvollerweise einfache Druckschalter sein sollten, die ggf. Mehrstufenschalter sind. Diese Schalter sind leicht zu bedienen, lenken den Fahrer am wenigsten ab und sind zudem robust und einfach aufgebaut. Mehrstufenschalter bieten die Möglichkeit je nach Betätigungsweg des Schalters verschiedene Funktionen auszulösen.

So können die Schaltelemente Druckstößel aufweisen, die auf eine Kontaktmatte etwa senkrecht einwirken, um bei der Betätigung einen Kontakt zu schließen oder zu öffnen.

Damit immer nur eine Funktion trotz der gemeinsamen Wipptaste ausgeführt wird, kann die Bedienungsschalteranordnung derart ausgeführt sein, dass immer nur eine Funktion durch die gemeinsame Wipptaste ausgelöst wird. Dazu ist in einer bevorzugten Ausführungsform vorgesehen, dass die Bedienungsschalteranordnung Zwangsführungsmittel aufweist. Diese können als an der Rückseite der Wipptaste ausgebildete Führungsstößel und entsprechende in einem Gehäuseteil ausgebildete Führungsdurchbrüche ausgebildet sein. Günstig ist es dabei, wenn die die Führungsdurchbrüche im Querschnitt kreuzförmig ausgebildet sind.

Wird also bei z. B. während der Fahrt durch den Benutzer die gemeinsame Wipptaste nicht genau im Druckpunkt eines der Schaltelemente betätigt, sondern etwa zwischen zwei von diesen, z. B. durch Druck auf eine Ecke der Wipptaste, so wird trotzdem nur eine Funktion ausgelöst, da die Zwangsführungsmittel sicherstellen, dass die Wipptaste sich letztendlich nur in eine der Schaltrichtungen erfolgreich bewegen kann.

Die komplette Bedienungsschalteranordnung kann ferner als Modul aufgebaut sein, so dass sie im Wartungsfall als Ganzes ein- und ausbaubar ist.

Die Erfindung betrifft auch ein Verfahren für die Bedienung einer Vorrichtung zur Anzeige und Steuerung von kraftfahrzeugbezogenen Funktionen mit der oben beschriebenen Bedienungsschalteranordnung, die insbesondere in ein Lenkrad integriert ist.

So lassen sich mit der Bedienungsschalteranordnung ein elektrisches und/oder elektronisches Gerät, insbesondere Musikanlage, im Fahrzeug oder ein hierarchisches Menü steuern, wie oben angedeutet wurde.

Dabei kann die Bedienungsschalteranordnung zur Bedienung/Steuerung eines Cursors des Menüs dienen, wobei es sinnvoll ist, wenn die kreuzförmig angeordneten Schaltelemente den Wechsel der Menüebenen und der Menüpunkte in den einzelnen Ebenen erlauben. So können die gegenüberliegenden Schaltelemente als Richtungssteuerungsschalter im Menü dienen.

Das zentrale weitere Schaltelement kann z. B. als ein Auswahl- und Bestätigungsschalter dienen, um die jeweils angewählte Funktion auszuwählen oder auszuführen.

Sind ein oder mehrere Schaltelemente derart ausgeführt, dass die sich mit ihnen ausgeführten Funktionen kontextabhängig ändern, kann auf intuitive Weise immer die am häufigsten verwendete Funktion auf das jeweilige Schaltelement "gelegt" werden.

Andererseits können auch die durch ein oder mehrere Schaltelemente ausgeführten Funktionen mit den jeweiligen Schaltelementen fest vorgegeben bzw. verdrahtet sein, so dass besonders wichtige Funktionen, wie die Lautstärkeregelung immer zur Verfügung stehen.

Wenn ein oder mehrere Schaltelemente derart ausgeführt sind, dass die ihnen zugewiesenen Funktionen frei programmierbar sind, ist eine Anpassung der Bedienung an die Vorlieben des Fahrers möglich. Auch erlaubt dies eine Änderung der Funktionen, wenn z. B. ein weiteres Gerät in das Fahrzeug neu eingebaut wird oder eine neue "Software" Version eingespielt wird.

Wird die Betätigungsdauer eines oder mehrerer Schaltelemente überwacht, so können in Abhängigkeit davon unterschiedliche Funktionen ausgelöst werden, was auf einfache Weise eine mehrfache Belegung der Schaltelemente erlaubt. So kann eine kurze Betätigung des zentralen Schaltelements eine Auswahl bewirken (s. o.), wohingegen eine längere Betätigung ein Zurückspringen in ein Basismenü oder ein Zurücksetzen bzw. Null-Setzten bestimmter Funktionen erlaubt.

Sind mehrere Bedienungsschalteranordnungen im Fahrzeug vorgesehen, vorzugsweise zwei im Lenkrad integriert, z. B. an den Speichen in günstiger Positionierung zu den Daumen, kann eine Bedienungsschalteranordnung der Musikanlage und ggf. dem Telefon zu geordnet sein und die andere einer Vorrichtung zur Anzeige und Steuerung von kraftfahrzeugbezogenen Funktionen, wie einem Navigationssystem und/oder einem Board- oder Trippcomputer, zu geordnet sein.

Entsprechend betrifft die Erfindung auch ein Lenkrad eines Kraftfahrzeugs mit zwei integrierten Bedienungsschalteranordnungen, wie sie vorangehend beschrieben wurden. Insbesondere sind die Bedienungsschalteranordnungen in den Speichen des Lenkrads angeordnet sind. Die linke Bedienungsschalteranordnung ist dabei zur Bedienung eines elektrisches und/oder elektronisches Geräts, insbesondere Musikanlage und/oder Telefon, im Fahrzeug vorgesehen, wohingegen die rechte Bedienungsschalteranordnung zur Bedienung eines hierarchisches Menüs einer Vorrichtung zur Anzeige und Steuerung von kraftfahrzeugbezogenen Funktionen im Fahrzeug vorgesehen ist.

Ein entsprechender Personenkraftwagen mit einem Lenkrad und einer Musikanlage, einer Telekommunikationsanlage und einer Vorrichtung zur Anzeige und Steuerung von kraftfahrzeugbezogenen Funktionen im Fahrzeug, insbesondere einem Navigationssystem/Boardcomputer, ist daher auch von der Erfindung umfasst.

Weitere Merkmale, Einzelheiten und Vorteile der Erfindung ergeben sich aus der nachfolgenden Beschreibung eines Ausführungsbeispieles anhand der Zeichnung.
Es zeigen:
- Fig. 1: eine Draufsicht auf ein Lenkrad eines PKW mit zwei erfindungsgemäßen Bedienungsschalteranordnungen;
- Fig. 2: einen Schnitt durch eine der Bedienungsschalteranordnungen aus Fig. 1;
- Fig. 3: eine perspektivische Explosionsansicht der Einzelteile der Bedienungsschalteranordnung aus Fig. 2;
- Fig. 4: die Funktionen der rechten Bedienungsschalteranordnung aus Fig. 1;
- Fig. 5A: eine Draufsicht auf ein Gehäuseteil der Bedienungsschalteranordnung aus Fig. 2;
- Fig. 5B: eine perspektivische Draufsicht auf die Rückseite der Wipptaste der Bedienungsschalteranordnung aus Fig. 2 und
- Fig. 6: eine schematische Ansicht der Zwangsführungsmittel aus Fig. 5A und B.

Mit Bezug zu den Figuren werden nachfolgend der Aufbau und der Einsatz erfindungsgemäßer Bedienungsschalteranordnungen erläutert.

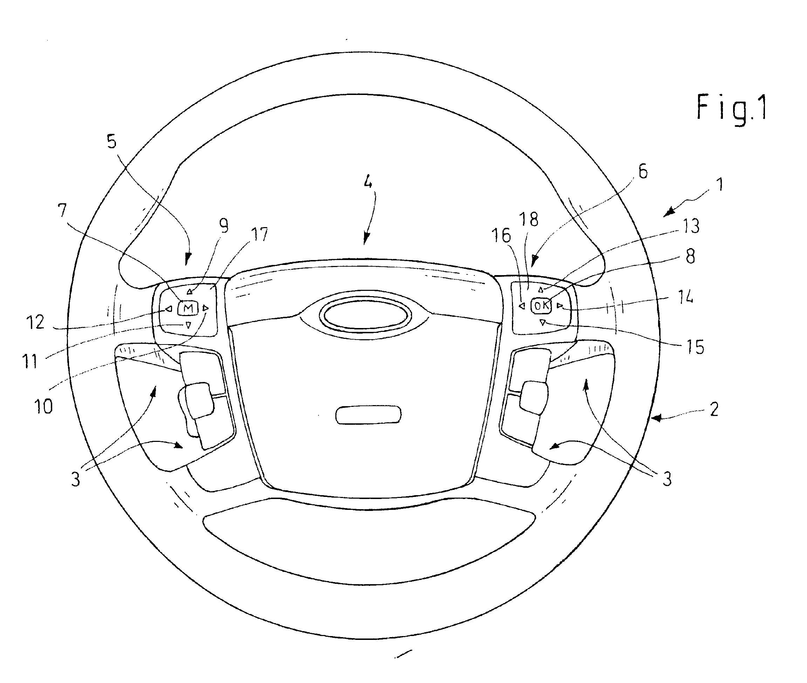

In Figur 1 ist ein Lenkrad 1 eines Personenkraftwagens in einer Draufsicht dargestellt, dass einen kreisförmigen Lenkkranz 2 aufweist, der über vier Speichen 3 mit einem Mittelteil 4 verbunden ist. Über das Mittelteil 4 wird üblicherweise das Lenkrad 1 mit der Lenksäule verbunden und es beherbergt meist einen Airbag.

Üblicherweise wird der Lenkkranz 2 von den Fingern umgriffen, wobei der Handballen so auf dem Lenkkranz 2 ruht, dass die Daumen in etwa auf den oberen Speichen 3 ruhen und zwar im Bereich des Übergangs der Speichen 3 zum Mittelteil 4.

An der jeweiligen oberen linken und rechten Speiche 3 ist jeweils eine Schalteranordnung 5, 6 vorgesehen, die spiegelbildlich zu einender angeordnet sind. Jede Schalteranordnung umfasst ein zentrales Schaltelement 7 bzw. 8, das über eine entsprechende, in der Figur 1 sichtbare Taste betätigbar ist.

Kreuzförmig um dieses zentrale Schaltelement 7 bzw. 8 sind jeweils vier weitere Schaltelemente 9, 10, 11, 12 bzw. 13, 14, 15, 16 angeordnet, die über eine gemeinsame sichtbare Wipptaste 17, 18 separat betätigbar sind, die das zentrale Schaltelement 7, 8 bzw. deren Taste umgibt. Die Wipptaste 17, 18 umgibt dabei die Taste des zentralen Schaltelements 7, 8 in etwa quadratisch mit abgerundeten Ecken, wobei die oberen und unteren Seiten des Quadrats leicht konisch nach Außen in Übereinstimmung mit den Speichen 3 zu laufen.

Nach folgend wird zur Vereinfachung Bezug genommen auf die Schaltelemente selbst, wobei klar ist, dass in Figur 1 lediglich deren Betätigungstasten sichtbar sind.

Die jeweils gegenüberliegenden Schaltelemente 9,11 und 10,12 bzw. 13,15 und 14,16 bilden jeweils ein einer vertikalen bzw. horizontalen Richtung zugeordnetes Paar mit entgegen gesetzter Funktion, wie später beschrieben werden wird. Ihre Tasten sind zudem mit entsprechenden Symbolen markiert.

Alle Schaltelemente sind Druckschalter und derart ausgeführt, dass sie separat von einander betätigbar sind. Ferner weisen ihre Tasten Noppen; Balken oder ähnliche Strukturen auf, die ein Auffinden ihres Druckpunktes ohne visuelle Rückkopplung ermöglichen.

Alle Schaltelemente werden von einem nicht dargestellten Mikroprozessor überwacht, so dass ihre Betätigungsdauer feststellbar ist und in Abhängigkeit davon unterschiedliche Funktionen pro Schaltelement ausführbar sind. Zudem erlaubt der Mikroprozessor eine Programmierung bzw. Änderung der Funktion des jeweiligen Schaltelements, ggf. auch kontextabhängig.

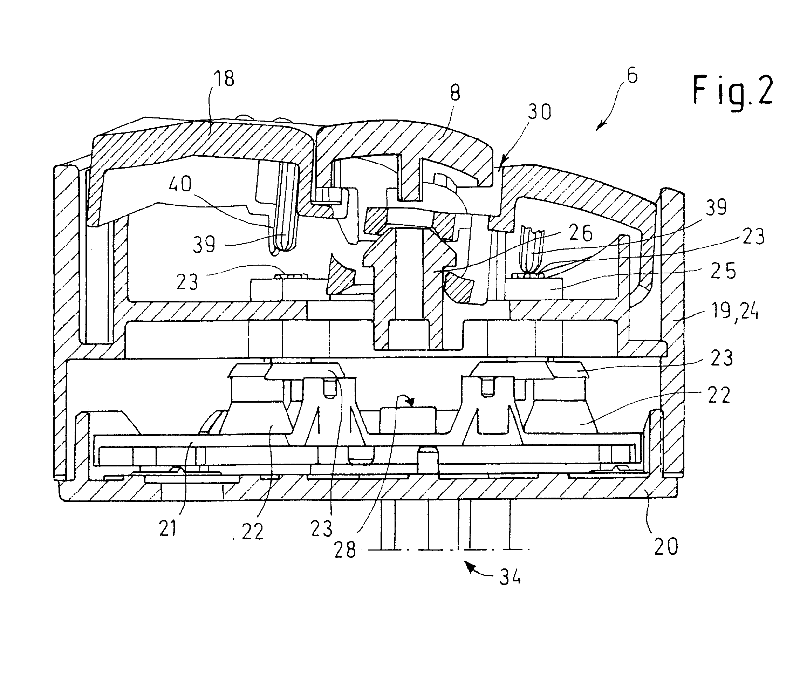

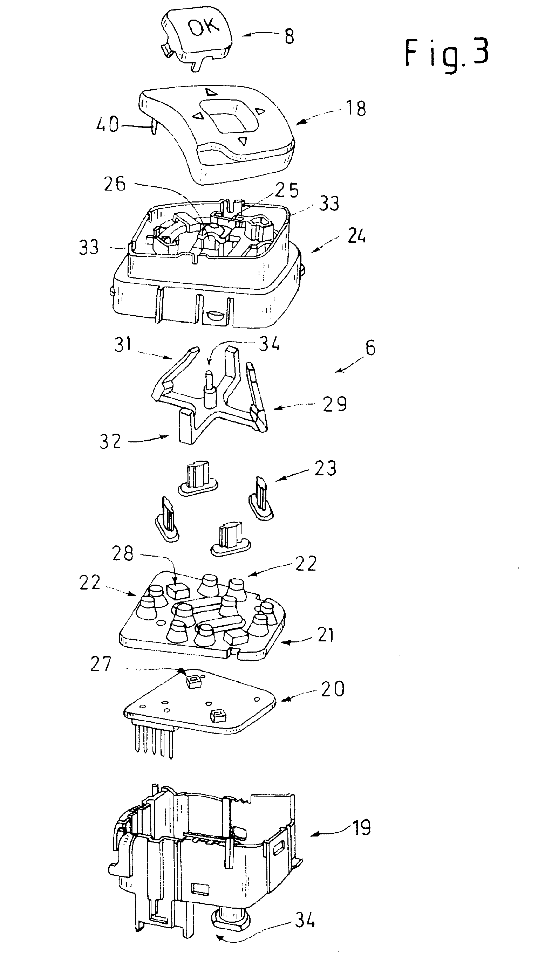

In den Figuren 2 und 3 ist eine Schalteranordnung im Detail dargestellt. Im vorliegenden Fall handelt es sich um die rechte Schalteranordnung 6. Es versteht sich jedoch, dass die linke Schalteranordnung 5 analog aufgebaut ist.

Die Schalteranordnung 6 umfasst eine Gehäusebasis 19, die die Verbindung zum Lenkrad 1 bereitstellt. In der Gehäusebasis 19 ist eine Platine 20 eingesetzt, die eine mögliche Auswertelektronik oder Widerstandskaskade für die einzelnen Schaltelemente trägt sowie Kontaktstifte für die Verbindung zur weiteren Fahrzeugelektronik. Auf diese Platine 20 ist eine Kontaktmatte 21 aufgelegt, die mit Paaren von Kontaktelementen 22 versehen ist, die jeweils einem Schaltelement zugeordnet sind und bei einer Betätigung, also einem Druck, einen Kontakt schließen, so dass die Auswerteinheit die Betätigung des jeweiligen Schaltelements wahrnimmt.

Zur Betätigung der Kontaktelemente 22 der vier äußeren Schaltelemente 13 - 16 sind jeweils Stößel 23 vorgesehen, die eine verbreiterte Basis aufweisen, so dass beide Kontaktelemente 22 eines Paares gemeinsam niedergedrückt werden. Die Kontaktelemente 22 sind so ausgeführt, dass sie neben einem Druckwiderstand auch eine federnde Rückstellung der Stößel 23 bewirken.

Die Stößel 23 und die Kontaktmatte 21 werden von einem Gehäuseoberteil 24 abgedeckt, das zusätzlich Führungsdurchbrüche 25 für die Stößel 23 aufweist, so dass diese mit der darüber angeordneten Taste18 zusammenwirken können, um eine Betätigung der Kontaktelemente 22 zu bewirken. Die Wipptaste 18 weist dazu an ihrer Rückseite jeweils vier Betätigungsstößel 39 auf, die mit den entsprechenden Stößeln 23 zusammenwirken.

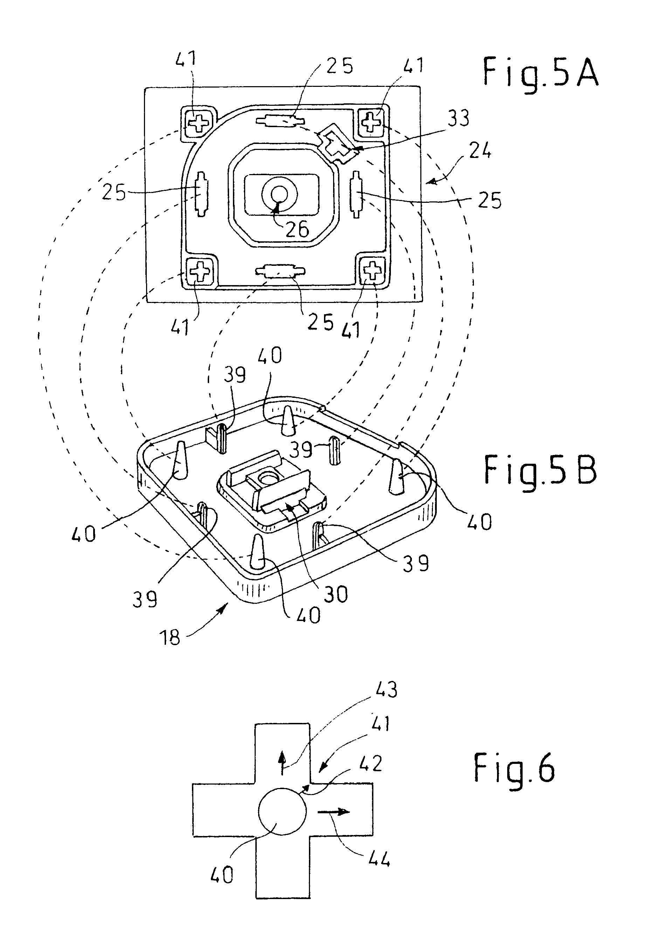

Wie aus Fig. 5A, B und 6 am besten ersichtlich ist, ist Schalteranordnung 6 dabei derart ausgeführt, dass immer nur eine Funktion durch die Wipptaste 18 betätigt bzw. ausgelöst wird. Wird also bei z. B. während der Fahrt durch den Benutzer die Wipptaste 18 nicht genau im Druckpunkt eines der Schaltelemente 13- 16 betätigt, sondern etwa zwischen zwei von diesen, z. B. durch Druck auf eine Ecke der Wipptaste 18, so wird trotzdem nur eine Funktion ausgelöst. Hierzu weist die Schalteranordnung 6 geeignete Zwangsführungsmittel auf.

Dazu sind ebenfalls an der Rückseite der Wipptaste 18 in den Ecken Führungsstößel 40 vorgesehen, die in entsprechende Führungsdurchbrüche 41 in dem Gehäuseoberteil 24 eingreifen. Die Führungsdurchbrüche 41 sind im Querschnitt kreuzförmig ausgebildet.

In Fig. 6 ist schematisch die Ruhelage eines Führungsstößels 40 in einem Führungsdurchbruch 41 dargestellt. Dabei befindet sich der Führungsstößel 40 im Zentrum des kreuzförmigen Führungsdurchbruchs 41. Wir nun die Taste 18 zwischen zwei Druckpunkten betätigt, z. B. zwischen den Positionen, die den Schaltelementen 13 und 14 entsprechen, also der rechten oberen Ecke, so wird der Führungsstößel 40 sich in Richtung des Pfeils 42 bewegen und an den Seitenrand des Führungsdurchbruchs 41 zwischen den Armen des Kreuzes anstoßen, so dass zunächst weder eine Betätigung des Schaltelementes 13 noch 14 stattfindet. Allerdings wird es im Regelfall so sein, dass der Druck nicht exakt zwischen den beiden Schaltelementen 13 und 14 ausgeübt wird, sondern eine der beiden Richtungen wird immer etwas bevorzugt sein, d. h. mit etwas stärkerer Kraft beaufschlagt werden. Daher wird der Druck der Wipptaste 18 etwas in eine der Richtungen neigen, so dass der Führungsstößel 40 sich in Richtung des Pfeils 43 (Schaltelement 13) oder des Pfeils 44 (Schaltelement 14) innerhalb des Führungsdurchbruchs 41 bewegen wird, wodurch das entsprechende Schaltelement 13 bzw. 14 betätigt wird.

Da in jeder Ecke entsprechende Führungsstößel 40 und Führungsdurchbrüche 41 vorhanden sind, müssen immer zwei Führungsstößel 40 die oben beschriebenen Bewegungen ausführen, um eine Betätigung eines Schaltelements zu erreichen.

Die Wipptaste 18 ist ferner mit einer zentralen Vertiefung 30 (Fig. 2) versehen, so dass diese die zentrale Taste 8 des zentralen Schaltelements aufnehmen kann. Für den Betätigungsstößel der zentralen Taste 8 ist zudem eine Durchbrechung in der Vertiefung 30 vorgesehen.

Das Gehäuseoberteil 24 weist einen zentralen Führungsdurchbruch bzw. hohlen Dorn 26 auf, der einen sphärischen Kopf aufweist, auf dem die Wipptaste 18 mit einer entsprechenden Fläche ruht, so dass diese in die Richtung aller vier Schaltelemente "wippbar" ist. Dabei ist die zentrale Vertiefung 30 so bemessen, dass die zentrale Taste 8 dabei nicht beeinflusst wird. Dies lässt sich besonders gut in Fig. 2 erkennen, in der die Wipptaste 18 leicht nach unten gedrückt ist.

Die Taste 18 ist aus lichtdurchlässigem Kunststoff hergestellt, so dass sie hinterleuchtet werden kann. Hierzu weist die Platine 20 zwei LED's 27 auf, die durch Fenster 28 in der Kontaktmatte 21 ihr Licht an einen geeignet aufgebauten Lichtleiter 29 (siehe Fig. 3) abgeben, der das Licht dann an die Tasten weiterleitet. Dazu weist der Lichtleiter 29 vier kreuzförmig angeordnete sich nach oben ersteckende Arme 31, 32 auf, von denen zwei 31 jeweils einem Fenster 28 zu geordnet sind und so das Licht der LED's 27 aufnehmen. Diese Arme 31 leiten das Licht weiter, so dass alle vier den Schaltelementen 13 - 16 entsprechende Positionen der Wipptaste 18 hinterleuchtbar sind. Der Lichtleiter 29 ist in Fig. 2 aus Gründen der Übersichtlichkeit weggelassen. Die Taste 8 ist dagegen undurchsichtig ausgeführt.

Die weiteren zwei Arme 32 dienen als Führungselemente und greifen im zusammengesetzten Zustand dazu in entsprechende Führungsdurchbrüche 33 in dem Gehäuseoberteil 24 ein.

Zusätzlich hat der Lichtleiter 29 eine zweite Funktion und zwar die eines Betätigungsstößels für das zentrale Schaltelement 8 bzw. deren Taste. Dazu weist der Lichtleiter 29 einen zentralen Dorn 34 auf, der durch den hohlen Dorn 26 des Gehäuseoberteils 24 greift und auf dem die Taste 8 sitzt. Wird die Taste 8 gedrückt, bewegt sich der Lichtleiter 29 als Ganzes nach unten, so dass die zentral angeordneten Kontaktelemente 22 über die beiden nicht lichtführenden Arme 32 betätigt werden. Dabei wird der Lichtleiter 29 über die Führungsdurchbrüche 33 geführt.

Die gesamte Schalteranordnung 6 wird als vorgefertigtes Modul verbaut bzw. in ein Lenkrad 1 rastend und verschraubt eingesetzt, wobei ein Kontaktstecker 34 an der Unterseite der Gehäusebasis 19 zur Verbindung der Kontakte der Platine 20 mit der weiteren Fahrzeugelektronik dient.

Nachfolgend wird die Verwendung des oben beschriebenen Lenkrads 1 in einem Personenkraftwagen mit einer Musikanlage, einer Telekommunikationsanlage und einer Vorrichtung zur Anzeige und Steuerung von kraftfahrzeugbezogenen Funktionen im Fahrzeug, insbesondere einem Navigationssystem/Boardcomputer beschrieben, wobei die linke Bedienungsschalteranordnung 5 zur Bedienung der Musikanlage und der Telekommunikationsanlage und die die rechte Bedienungsschalteranordnung 6 zur Bedienung eines hierarchisches Menüs der Vorrichtung zur Anzeige und Steuerung von kraftfahrzeugbezogenen Funktionen vorgesehen ist.

In dem vorliegenden Beispiel dient die linke Schalteranordnung 5 zur Steuerung/Betätigung der Musik- und Telefonanlage im Fahrzeug.

Dazu sind die vertikalen Schaltelemente 9,11 der linken Schalteranordnung 5 fest verdrahtet, d. h. einer bestimmten Funktion fest zugewiesen unabhängig von der Betätigungsdauer. Im vorliegenden Fall ist dies die Lautstärkeregelung einer nicht dargestellten Musikanlage.

Die übrigen horizontalen Schaltelemente 10,12 sind kontextabhängig belegt, d. h. ihre Funktion ändert sich, je nach dem welches Gerät der Musikanlage gerade im Betrieb ist und ist abhängig von der Betätigungsdauer. So haben die horizontalen Schaltelemente 10,12 bei kurzer Betätigung die folgenden Funktionen:
- Im Radiobetrieb: Automatischen Sendersuchlauf in die jeweilige Richtung starten;
- Im Kassettenbetrieb: Beginnen und Beenden des schnellen Vor- und Zurückspulens;
- Im CD-Spielerbetrieb: Vor- und Zurückspringen zwischen den einzelnen Titeln;
- Im CD-Wechslerbetrieb: Vor- und Zurückspringen zwischen den einzelnen Titeln der momentan ausgewählten CD;

Entsprechende weitere Funktionen sind für MP3-Player, Minidisk-Spieler usw. denkbar.

Dagegen haben die horizontalen Schaltelemente 10,12 bei längerer Betätigung die folgenden Funktionen:
- Im Radiobetrieb: Kontinuierliches Durchlaufen der Radio-Frequenzen in die jeweilige Richtung solange die Wipptaste 17 gedrückt bleibt;
- Im Kassettenbetrieb: Beginnen und Beenden des schnellen Vor- und Zurückspulens;
- Im CD-Wechslerbetrieb: Kontinuierliches Durchlaufen der Abspielposition innerhalb des jeweiligen Titels der momentan ausgewählten CD in die jeweilige Richtung solange die Taste gedrückt bleibt;

Entsprechende weitere Funktionen sind für MP3-Player, Minidisk-Spieler usw. denkbar.

Das zentrale Schaltelement 7 ist sowohl fest verdrahtet als auch kontextabhängig beschaltet.

So wird bei einem langen Druck der Taste 7 die Umschaltung zwischen verschiedenen Geräten der Musikanlage bewirkt. Diese können analog zu oben sein: Radio, CD-Spieler, Kassettenlaufwerk, CD-Wechsler, MP3-Player, Minidisk-Spieler usw.

Bei einem kurzen Druck der Taste 7 wird dagegen jeweils eine unterschiedliche Funktion in Abhängigkeit des gerade verwendeten Geräts ausgeführt. Bei kurzer Betätigung werden die folgenden Funktionen ausgeführt:
- Im Radiobetrieb: Vorauswahl ändern;
- Im Kassettenbetrieb: Kassettenabspielrichtung ändern;
- Im CD-Wechslerbetrieb: Vor- und Zurückspringen zwischen den eingelegten CD's;
   Daneben kann durch kurzen Druck auf die zentrale Taste 7 ein eingehendes Telefonat angenommen werden oder bei bestehender Verbindung ein Telefonat beendet werden.

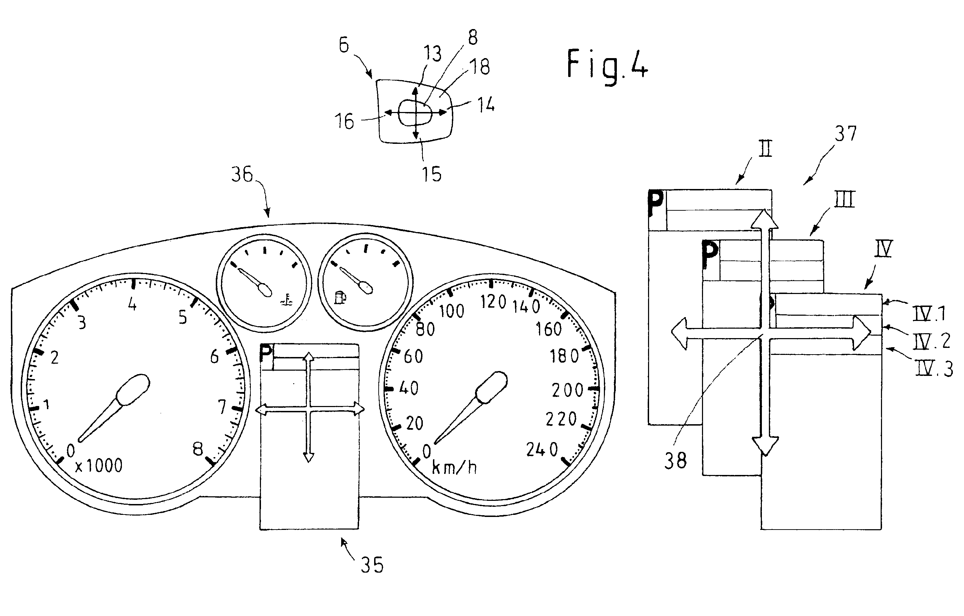

In dem vorliegenden Beispiel dient die rechte Schalteranordnung 6 zur Steuerung/ Betätigung eines hierarchischen Menüs 37, das auf einer Anzeige 35 einer sonst nicht weiter dargestellten Vorrichtung zur Anzeige und Steuerung von kraftfahrzeugbezogenen Funktionen dargestellt wird. Dies ist in Fig. 4 schematisch dargestellt.

Die Anzeige 35 ist aus ergonomischen Gründen im Blickfeld des Fahrers, bevorzugt gut sichtbar zentral im Armaturenbrett 36 zwischen der Geschwindigkeits- und Drehzahlanzeige angeordnet. Somit wird der Fahrer möglichst wenig vom Fahrgeschehen abgelenkt und muss keine größeren Augenbewegungen oder Kopfdrehungen vollführen.

Die Vorrichtung ist z. B. ein übliches Navigations-/Boardcomputersystem, das neben der Navigation über GPS usw. auch Verbrauchswerte, Reichweite, Außentemperatur, momentaner Verbrauch, Uhrzeit usw. anzeigt und die Steuerung/Einstellung weiterer Funktionen des Fahrzeugs erlaubt.

Die Vorrichtung zur Anzeige und Steuerung von kraftfahrzeugbezogenen Funktionen wird über das hierarchische Menü 37 gesteuert, eingestellt und betätigt. Das Menü umfasst dazu ein Basismenü I (nicht dargestellt) und mehrere Menüebenen II, III, IV mit jeweils mehreren übereinander listenartig dargestellten Menüpunkten II.1, II.2, II. 3 ...; III.1, III.2, III.3 .... IV.1, IV.2, IV.3 usw.

Das hierarchische Menü 37 wird mittels eines Cursors gesteuert, eingestellt und betätigt, der wiederum von den Schaltelementen der Schalteranordnung 6 bewegt wird. In Fig. 4 ist der Cursor 38 als Kreuz mit Andeutung der Bewegungsrichtungen dargestellt.

Zur Cursorbewegung sind die vertikalen Schaltelemente 13, 15 der rechten Schalteranordnung 6 fest verdrahtet, d. h. einer bestimmten Funktion fest zugewiesen und zwar unabhängig von der Betätigungsdauer. Im vorliegenden Fall ist dies das Bewegen des Cursors durch die übereinander listenartig dargestellten Menüpunkte (z. B. IV.1, IV.2, IV.3 usw.) einer Menüebene (hier IV). Kommt der Cursor bei einer Liste oben oder unten an, so springt er nach unten bzw. oben zum letzten bzw. ersten angezeigten Menüpunkt. Er bewegt sich also intuitiv zyklisch durch die dargestellte Liste in Richtung der jeweilig betätigten Taste eines Schaltelements, hier 13, 15.

Die horizontalen Schaltelemente 14, 16 bzw. Tasten sind ebenfalls fest belegt, nämlich mit dem Bewegen des Cursors zwischen Menüebenen, d. h. nach links zum vorausgehenden Menü höherer Ebene (z. B. III + 1 = IV) oder nach rechts zum darunter liegenden Menü tieferer Ebene (z. B. III +- 1 = II).

Bei längerem Druck bewirkt die Betätigung des linken Schaltelements 16 mittels der Wipptaste 18 ein Zurückspringen des Cursors 38 bzw. der Anzeige 35 in das Basismenü I unabhängig von der momentanen Cursorposition.

Das zentrale Schaltelement 8 ist ebenfalls fest mit einer Funktion beschaltet. So wird bei einem langen Druck die angezeigte Funktion zurückgesetzt. Beispielhaft sind das Rücksetzten des Tageskilometerzählers oder des Durchschnittsverbrauchs genannt.

Bei einem kurzen Druck wird dagegen eine Auswahl bzw. Quittierung der momentan mit dem Cursor 38 auf der Anzeige 35 im Menü ausgewählten Funktion durchgeführt. So könnte z. B. die Umschaltung der Standardsprache für das Menüsystem der Anzeige quittiert werden.

Es versteht sich, dass eine Vielzahl von Varianten und Kombinationen innerhalb der Erfindung denkbar sind.

### Bezugszeichenliste

- 1: Lenkrad
- 2: Lenkkranz
- 3: Speiche
- 4: Mittelteil
- 5: Schalteranordnung, links
- 6: Schalteranordnung, rechts
- 7: Zentrales Schaltelement, links
- 8: Zentrales Schaltelement, rechts
- 9: Schaltelemente, links
- 10: Schaltelemente, links
- 11: Schaltelemente, links
- 12: Schaltelemente, links
- 13: Schaltelemente, rechts
- 14: Schaltelemente, rechts
- 15: Schaltelemente, rechts
- 16: Schaltelemente, rechts
- 17: Wipptaste, links
- 18: Wipptaste, rechts
- 19: Gehäusebasis
- 20: Platine
- 21: Kontaktmatte
- 22: Kontaktelemente
- 23: Stößel
- 24: Gehäuseoberteil
- 25: Führungsdurchbruch
- 26: Hohler Dorn
- 27: LED
- 28: Fenster
- 29: Lichtleiter
- 30: Vertiefung
- 31: Arme
- 32: Arme
- 33: Führungsdurchbruch
- 34: Dorn
- 35: Anzeige
- 36: Armaturenbrett
- 37: Menü
- 38: Cursor
- 39: Betätigungsstößel
- 40: Führungsstößel
- 41: Führungsdurchbruch
- 42: Pfeil
- 43: Pfeil
- 44: Pfeil

- I, II, III, IV: Menüebene
- 11.1,11.2,11.3: Menüpunkte
- III.1, III.2, III.3: Menüpunkte
- IV.1, IV.2, IV.3: Menüpunkte

## Patentansprüche

1. Bedienungsschalteranordnung (5, 6) für ein Kraftfahrzeug, insbesondere zur Integration in ein Lenkrad (1), mit vier Schaltelementen (9, 10, 11, 12; 13, 14, 15, 16), die kreuzförmig angeordnet sind, und mit einem weiteren Schaltelement (7; 8), das relativ zu den vier Schaltelementen (9, 10, 11, 12; 13, 14, 15, 16) zentral angeordnet ist, wobei die vier Schaltelemente (9, 10, 11, 12; 13, 14, 15, 16) kreuzförmig um das zentrale weitere Schaltelement (7; 8) angeordnet sind; wobei die Schaltelemente (7, 9, 10, 11, 12; 8, 13, 14, 15, 16) derart ausgeführt sind, dass sie separat von einander betätigbar sind und dass eine das weitere Schaltelement (7; 8), insbesondere ringförmig, umgebende gemeinsame Wipptaste (17; 18) vorgesehen ist, über die die vier Schaltelemente (9, 10, 11, 12; 13, 14, 15, 16) separat betätigbar sind,
**dadurch gekennzeichnet, dass**
das zentrale weitere Schaltelement (7, 8) derart ausgeführt, ist dass es in Abhängigkeit seiner Betätigungsdauer unterschiedlichen Funktionen zugeordnet ist.

2. Bedienungsschalteranordnung nach Anspruch 1, **dadurch gekennzeichnet, dass** das weitere Schaltelement (7; 8) unabhängig von den vier Schaltelementen über eine separate Taste betätigbar ausgeführt ist.

3. Bedienungsschalteranordnung nach einem der vorhergehenden Ansprüche, **dadurch gekennzeichnet, dass** die Schaltelemente Mehrstufenschalter sind.

4. Bedienungsschalteranordnung nach einem der vorhergehenden Ansprüche, **dadurch gekennzeichnet, dass** die Bedienungsschalteranordnung (5, 6) derart ausgeführt ist, dass immer nur eine Funktion durch die gemeinsame Wipptaste (17; 18) ausgelöst wird.

5. Verfahren für die Bedienung einer Vorrichtung zur Anzeige und Steuerung von kraftfahrzeugbezogenen Funktionen mit einer Bedienungsschalteranordnung (5, 6) nach einem der Ansprüche 1 bis 4, **dadurch gekennzeichnet, dass** mit der Bedienungsschalteranordnung (5) ein elektrisches und/oder elektronisches Gerät, insbesondere eine Musikanlage, im Fahrzeug gesteuert wird.

6. Verfahren nach Anspruch 5, **dadurch gekennzeichnet, dass** bei einem langen Druck des zentralen weiteren Schaltelements (7) eine Umschaltung zwischen verschiedenen Geräten einer Musikanlage bewirkt wird.

7. Verfahren nach Anspruch 5 oder 6, **dadurch gekennzeichnet, dass** bei einem kurzen Druck des zentralen weiteren Schaltelements (7) eine unterschiedliche Funktion in Abhängigkeit des gerade verwendeten Geräts ausgeführt wird.

8. Verfahren für die Bedienung einer Vorrichtung zur Anzeige und Steuerung von kraftfahrzeugbezogenen Funktionen mit einer Bedienungsschalteranordnung (5, 6) nach einem der Ansprüche 1 bis 4, welches insbesondere zweifach in ein Lenkrad (1) integriert ist, **dadurch gekennzeichnet, dass** mit der Bedienungsschalteranordnung (6) ein hierarchisches Menü (37) der Vorrichtung zur Anzeige und Steuerung von kraftfahrzeugbezogenen Funktionen bedient/gesteuert wird.

9. Verfahren nach Anspruch 8, **dadurch gekennzeichnet, dass** bei einem langen Druck des zentralen weiteren Schaltelements (8) die angezeigte Funktion zurückgesetzt wird.

10. Verfahren nach Anspruch 8 oder 9, **dadurch gekennzeichnet, dass** bei einem kurzen Druck des zentralen weiteren Schaltelements (8) eine Auswahl bzw. Quittierung einer mit einem Cursor (38) auf einer Anzeige (35) in einem Menü (37) ausgewählten Funktion durchgeführt wird.

11. Verfahren nach einem der Ansprüche 5 bis 10, **dadurch gekennzeichnet, dass** die Bedienungsschalteranordnung (6) zur Bedienung/Steuerung eines Cursors (38) des Menüs (37) dient.

12. Verfahren nach einem der Ansprüche 5 bis 11, **dadurch gekennzeichnet, dass** gegenüberliegende Schaltelemente (9, 11, 10, 12; 13, 15, 14, 16) Richtungssteuerungsschalter sind.

13. Verfahren nach einem der Ansprüche 5 bis 12, **dadurch gekennzeichnet, dass** ein oder mehrere Schaltelemente (7, 10, 12) derart ausgeführt sind, dass die sich mit ihnen ausgeführten Funktionen kontextabhängig ändern.

14. Verfahren nach einem der Ansprüche 5 bis 13, **dadurch gekennzeichnet, dass** die durch ein oder mehrere Schaltelemente (9, 11; 8, 13, 14, 15, 16) ausgeführten Funktionen mit den jeweiligen Schaltelementen fest vorgegeben sind.

15. Verfahren nach einem der Ansprüche 5 bis 14, **dadurch gekennzeichnet, dass** ein oder mehrere Schaltelemente derart ausgeführt sind, dass die ihnen zugewiesenen Funktionen (7, 10, 12) frei programmierbar sind.

16. Verfahren nach einem der Ansprüche 5 bis 15, **dadurch gekennzeichnet, dass** Betätigungsdauer eines oder mehrerer Schaltelemente (9, 11, 10, 12; 13, 15, 14, 16) überwacht wird und in Abhängigkeit davon unterschiedliche Funktionen ausgelöst werden.

## Claims

1. Operating switch arrangement (5, 6) for a motor vehicle, in particular for integration in a steering wheel (1), having four switching elements (9,10, 11, 12; 13, 14, 15, 16), which are arranged in the form of a cross, and having a further switching element (7; 8) which is arranged centrally in relation to the four switching elements (9, 10, 11, 12; 13, 14, 15, 16), the four switching elements (9, 10, 11, 12; 13, 14, 15, 16) being arranged in the form of a cross around the central, further switching element (7; 8), the switching elements (7, 9, 10, 11, 12; 8, 13, 14, 15, 16) being embodied in such a way that they can be actuated separately from one another, and that a common rocker key switch (17; 18) which surrounds the further switching element (7; 8), in particular in an annular shape, and by means of which the four switching elements (9, 10, 11, 12; 13, 14, 15, 16) are actuated separately, is provided, **characterized in that** the central, further switching element (7, 8) is embodied in such a way that it is assigned to different functions depending on the period of time for which it is actuated.

2. Operating switch arrangement according to Claim 1, **characterized in that** the further switching element (7; 8) is designed so as to be capable of being actuated independently of the four switching elements by means of a separate key switch.

3. Operating switch arrangement according to one of the preceding claims, **characterized in that** the switching elements are multistep switches.

4. Operating switch arrangement according to one of the preceding claims, **characterized in that** the operating switch arrangement (5, 6) is embodied in such a way that only one function is ever triggered by the common rocker key switch (17; 18).

5. Method for operating a device for displaying and controlling motor-vehicle-related functions with an operating switch arrangement (5, 6) according to one of Claims 1 to 4, **characterized in that** an electrical and/or electronic unit, in particular a music system, in the vehicle is controlled with the operating switch arrangement (5).

6. Method according to Claim 5, **characterized in that** pressing the central, further switching element (7) for a long time brings about switching over between various devices of a music system.

7. Method according to Claim 5 or 6, **characterized in that** pressing the central, further switching element (7) for a short time causes a different function to be carried out depending on the device currently being used.

8. Method for operating a device for displaying and controlling motor-vehicle-related functions with an operating switch arrangement (5, 6) according to one of Claims 1 to 4, which is in particular integrated in a dual fashion into a steering wheel (1), **characterized in that** the operating switch arrangement (6) is used to operate/control a hierarchical menu (37) of the device in order to display and control motor-vehicle-related functions.

9. Method according to Claim 8, **characterized in that** pressing the central, further switching element (8) for a long time resets the displayed function.

10. Method according to Claim 8 or 9, **characterized in that** pressing the central, further switching element (8) for a short time causes a selection or acknowledgement of a function selected with a cursor (38) on a display (35) in a menu (37) to be carried out.

11. Method according to one of Claims 5 to 10, **characterized in that** the operating switch arrangement (6) is used to operate/control a cursor (38) of the menu (37).

12. Method according to one of Claims 5 to 11, **characterized in that** switching elements (9, 11, 10, 12; 13, 15, 14, 16) which lie opposite one another are direction control switches.

13. Method according to one of Claims 5 to 12, **characterized in that** one or more switching elements (7, 10, 12) are embodied in such a way that the functions which are carried out with them change depending on context.

14. Method according to one of Claims 5 to 13, **characterized in that** the functions which are carried out by one or more switching elements (9, 11; 8, 13, 14, 15, 16) are permanently predefined with the respective switching elements.

15. Method according to one of Claims 5 to 14, **characterized in that** one or more switching elements are embodied in such a way that the functions (7, 10, 12) which are allocated to them are freely programmable.

16. Method according to one of Claims 5 to 15, **characterized in that** the period of time for which one or more switching elements (9, 11, 10, 12; 13, 15, 14, 16) are actuated is monitored, and different functions are triggered depending on this.

## Revendications

1. Ensemble de commutateur de commande (5, 6) pour un véhicule automobile, notamment pour l'intégration dans un volant de direction (1), comprenant quatre éléments de commutation (9, 10, 11, 12 ; 13, 14, 15, 16) qui sont disposés en forme de croix, et un élément de commutation supplémentaire (7 ; 8) qui est disposé centralement par rapport aux quatre éléments de commutation (9, 10, 11, 12 ; 13, 14, 15, 16), les quatre éléments de commutation (9, 10, 11, 12 ; 13, 14, 15, 16) étant disposés en forme de croix autour de l'élément de commutation central supplémentaire (7 ; 8), les éléments de commutation (7, 9, 10, 11, 12 ; 8, 13, 14, 15, 16) étant réalisés de telle sorte qu'ils puissent être actionnés séparément les uns des autres et en ce qu'une touche à bascule (17 ; 18) commune entourant notamment de manière annulaire l'élément de commutation supplémentaire (7 ; 8) est prévue, par le biais de laquelle les quatre éléments de commutation (9, 10, 11, 12 ; 13, 14, 15, 16) peuvent être actionnés séparément,
**caractérisé en ce que**
l'élément de commutation central supplémentaire (7 ; 8) est réalisé de telle sorte qu'il soit associé à différentes fonctions en fonction de sa durée d'actionnement.

2. Ensemble de commutateur de commande selon la revendication 1, **caractérisé en ce que** l'élément de commutation supplémentaire (7 ; 8) est réalisé de manière à pouvoir être actionné indépendamment des quatre éléments de commutation par le biais d'une touche séparée.

3. Ensemble de commutateur de commande selon l'une quelconque des revendications précédentes, **caractérisé en ce que** les éléments de commutation sont des commutateurs à plusieurs étages.

4. Ensemble de commutateur de commande selon l'une quelconque des revendications précédentes, **caractérisé en ce que** l'ensemble de commutateur de commande (5, 6) est réalisé de telle sorte qu'une seule fonction soit jamais déclenchée par la touche à bascule commune (17 ; 18).

5. Procédé de commande d'un dispositif pour indiquer et commander des fonctions relatives à un véhicule automobile, comprenant un ensemble de commutateur de commande (5, 6) selon l'une quelconque des revendications 1 à 4, **caractérisé en ce qu'**un appareil électrique et/ou électronique, notamment une installation de musique, est commandé dans le véhicule avec l'ensemble de commutateur de commande (5).

6. Procédé selon la revendication 5, **caractérisé en ce que** l'on peut effectuer une commutation entre différents appareils d'une installation de musique en pressant de manière prolongée sur l'élément de commutation central supplémentaire (7).

7. Procédé selon la revendication 5 ou 6, **caractérisé en ce que** dans le cas d'une courte pression sur l'élément de commutation central supplémentaire (7), on réalise une fonction différente en fonction de l'appareil particulier utilisé.

8. Procédé de commande d'un dispositif pour indiquer et commander des fonctions relatives à un véhicule automobile, comprenant un ensemble de commutateur de commande (5, 6) selon l'une quelconque des revendications 1 à 4, lequel est intégré notamment deux fois dans un volant de direction (1), **caractérisé en ce qu'**un menu hiérarchique (37) du dispositif pour indiquer et commander des fonctions relatives à un véhicule automobile est activé/commandé avec l'ensemble de commutateur de commande (6).

9. Procédé selon la revendication 8, **caractérisé en ce que** dans le cas d'une pression prolongée sur l'élément de commutation central supplémentaire (8), la fonction indiquée est réinitialisée.

10. Procédé selon la revendication 8 ou 9, **caractérisé en ce que** dans le cas d'une courte pression sur l'élément de commutation central supplémentaire (8), un choix ou un échappement d'une fonction choisie avec un curseur (38) sur un affichage (35) dans un menu (37) est effectué.

11. Procédé selon l'une quelconque des revendications 5 à 10, **caractérisé en ce que** l'ensemble de commutateur de commande (6) sert à l'activation/la commande d'un curseur (38) du menu (37).

12. Procédé selon l'une quelconque des revendications 5 à 11, **caractérisé en ce que** des éléments de commutation opposés (9, 11, 10, 12 ; 13, 15, 14, 16) sont des commutateurs de commande de direction.

13. Procédé selon l'une quelconque des revendications 5 à 12, **caractérisé en ce qu'**un ou plusieurs éléments de commutation (7, 10, 12) sont réalisés de telle sorte que les fonctions qu'ils commandent changent en fonction du contexte.

14. Procédé selon l'une quelconque des revendications 5 à 13, **caractérisé en ce que** les fonctions commandées par un ou plusieurs éléments de commutation (9, 11 ; 8, 13, 14, 15, 16) sont prédéfinies fixement avec les éléments de commutation respectifs.

15. Procédé selon l'une quelconque des revendications 5 à 14, **caractérisé en ce qu'**un ou plusieurs éléments de commutation sont réalisés de telle sorte que les fonctions (7, 10, 12) s'y rapportant puissent être librement programmées.

16. Procédé selon l'une quelconque des revendications 5 à 15, **caractérisé en ce que** la durée d'actionnement d'un ou de plusieurs éléments de commutation (9, 11, 10, 12 ; 13, 15, 14, 16) est contrôlée et en fonction de celle-ci, des fonctions différentes sont déclenchées.
